Europäisches Patentamt

European Patent Office

Office européen des brevets

(19)

(11) Numéro de publication : **0 146 444**
**B1**

(12) **FASCICULE DE BREVET EUROPÉEN**

(45) Date de publication du fascicule du brevet :
15.04.87

(51) Int. Cl.⁴ : **F 16 D 65/52, F 16 D 65/09**

(21) Numéro de dépôt : **84402314.3**

(22) Date de dépôt : **14.11.84**

(54) **Dispositif d'accrochage d'un élément d'une entretoise comportant un dispositif de réglage automatique sur un segment de frein à tambour.**

(30) Priorité : 21.11.83 FR 8318489

(43) Date de publication de la demande :
26.06.85 Bulletin 85/26

(45) Mention de la délivrance du brevet :
15.04.87 Bulletin 87/16

(84) Etats contractants désignés :
DE FR GB IT SE

(56) Documents cités :
DE-B- 1 005 855
FR-A- 2 023 300
FR-A- 2 386 734
FR-A- 2 404 766
FR-A- 2 417 037
FR-A- 2 514 847

(73) Titulaire : BENDIX France
126, rue de Stalingrad
F-93700 Drancy (FR)

(72) Inventeur : Denrée, Michel
10, Place Pluton
F-93600 Aulnay-sous-Bois (FR)
Inventeur : Michaud, Jean-Yves
105, Avenue Henri Barbusse
F-93120 La Courneuve (FR)

(74) Mandataire : Poidatz, Emmanuel et al
Service Brevets Bendix 44 rue François 1er
F-75008 Paris (FR)

Jouve, 18, rue St-Denis, 75001 Paris, France

## Description

L'invention se rapporte à un dispositif d'accrochage d'une entretoise de frein à tambour susceptible notamment d'équiper un véhicule automobile.

L'invention concerne en particulier un dispositif d'accrochage d'un élément d'une entretoise comportant un dispositif de réglage automatique sur un segment de frein à tambour.

On connaît de nombreux freins à tambour équipés de dispositifs de réglage automatique associés à une entretoise dont l'allongement est commandé automatiquement pour compenser l'usure des éléments de friction. Parmi ce type de frein, il en existe qui nécessite que les éléments de l'entretoise en contact avec les segments correspondants suivent impérativement les mouvements de ces segments pour permettre le fonctionnement du réglage automatique. On citera par exemple le FR-A-2 514 847 qui décrit une telle entretoise à réglage automatique. Il est toujours possible comme indiqué dans la demande de brevet citée ci-dessus, de mettre en place des ressorts entre les segments et l'élément correspondant de l'entretoise afin de s'assurer que celui-ci suit effectivement les mouvements du segment. Cette solution bien que répondant au problème posé nécessite la mise en place d'un ressort après montage de l'entretoise sur le frein d'une part et d'autre part ce ressort doit avoir une puissance suffisante, donc difficile à monter, pour garantir les mouvements simultanés de l'élément de l'entretoise et du segment correspondant. On notera également que l'accrochage d'un tel ressort sur l'élément d'entretoise proche du cliquet de commande peut provoquer la détérioration de celui-ci et donc rendre le réglage automatique inopérant.

L'invention propose un dispositif d'accrochage d'entretoise sur les segments de frein garantissant le mouvement simultané de l'élément d'entretoise et du segment correspondant et ne présentant pas les inconvénients énumérés ci-dessus.

Dans ce but, l'invention propose un dispositif d'accrochage d'un élément d'une entretoise comportant un dispositif de réglage automatique sur un segment de frein à tambour, caractérisé en ce que ledit dispositif est formé par une portion dudit élément maintenue au moyen d'un élément élastique dans une position opérante entre une zone d'appui et une saillie solidaire dudit segment, ledit élément élastique agissant sensiblement transversalement par rapport audit élément.

Il est clair que grâce à ces caractéristiques, l'élément d'entretoise est maintenu entre deux butées formées sur le segment, l'élément élastique ne faisant que maintenir l'élément d'entretoise entre ces deux butées. Il n'est donc pas nécessaire que cet élément élastique ait une puissance importante, les efforts entre l'élément d'entretoise et le segment ne passant pas ce ressort.

Selon une autre caractéristique de l'invention, l'élément élastique est solidaire dudit élément de l'entretoise.

Selon une autre caractéristique de l'invention, c'est une portion du ressort de rappel des segments qui assure la fonction de l'élément élastique.

On décrira maintenant à titre d'exemples non limitatifs trois modes de réalisation de l'invention en se référant aux dessins annexés dans lesquels :

la figure 1 est une vue en plan d'un frein à tambour réalisé conformément aux enseignements de la présente invention ;

la figure 2 est une vue agrandie partielle du dispositif d'accrochage de l'entretoise de la figure 1 ;

la figure 3 représente l'élément élastique du dispositif d'accrochage de la figure 2 ;

la figure 4 est une vue partielle similaire à la figure 1 et montrant un dispositif d'accrochage selon un second mode de réalisation ;

la figure 5 est une vue agrandie du dispositif d'accrochage de la figure 4 ;

la figure 6 est une vue en coupe partielle selon la ligne 6-6 de la figure 5 ;

la figure 7 est une vue réduite de l'élément élastique des figures 5 et 6 ;

la figure 8 est une vue partielle similaire à la figure 1 d'un troisième mode de réalisation de l'invention ; et

la figure 9 est une vue partielle agrandie du dispositif d'accrochage de la figure 8.

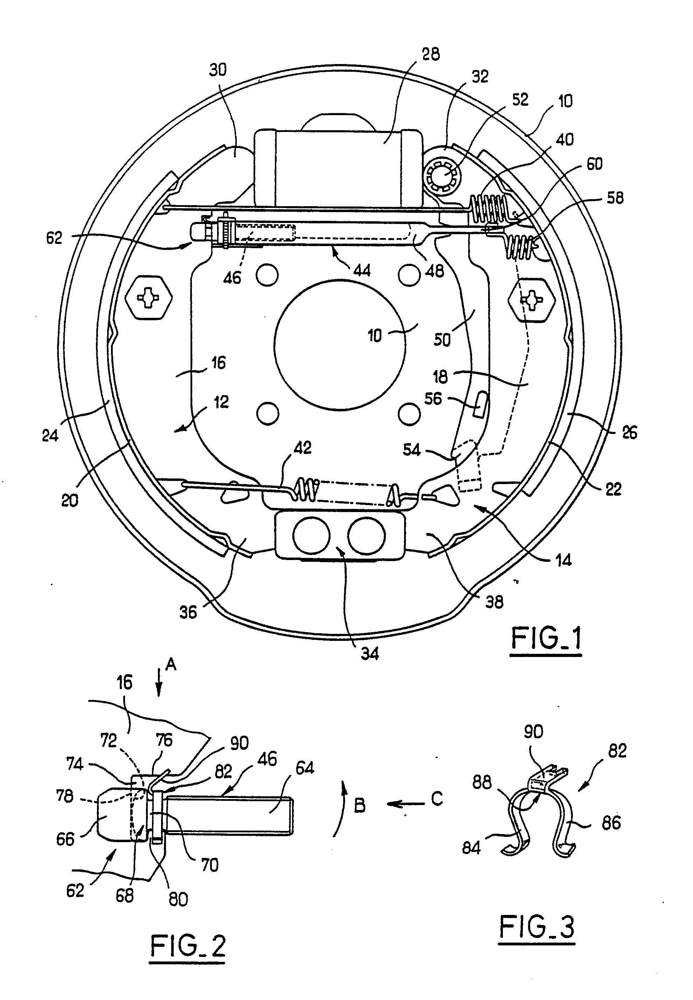

Le frein à tambour représenté sur la figure 1 comprend une plaque support 10 prévue pour être associée à une partie fixe du véhicule (non représentée) et sur laquelle sont reçus de façon coulissante deux segments de frein 12 et 14. Chacun des segments 12 et 14 comprend une âme sensiblement plate 16, 18 et une jante arquée 20, 22 sur laquelle est monté un élément de friction 24, 26 respectivement au moyen de rivets ou analogues. Des moyens de serrage, constitués dans le mode de réalisation représenté par un cylindre de roue 28, sont disposés entre les deux premières extrémités adjacentes 30 et 32 des segments 12 et 14 respectivement, et un bloc d'ancrage 34, associé à la plaque support 10, et disposé entre les deux autres extrémités 36 et 38 des segments 12 et 14. En outre, des ressorts de rappel 40 et 42 sont disposés respectivement au voisinage du cylindre de roue 28 et du bloc d'ancrage 34 afin de solliciter les extrémités 30 et 32 des segments contre le cylindre de roue 28 et les extrémités 36 et 38 des segments contre le bloc d'ancrage 34, respectivement. Une entretoise 44 est disposée entre les segments 12 et 14 au voisinage du cylindre de roue 28 de façon à définir une distance séparant au repos les extrémités 30 et 32 des segments. L'entretoise 44 comporte un dispositif de réglage automatique du type de celui décrit dans le FR-A-2 514 847 et ne sera pas décrit plus en détail. L'entretoise 44 comporte deux éléments 46 et 48 qui doivent suivre le mouvement des segments 12 et 14 respectivement. Dans le mode de réalisation représenté, le frein à tambour est équipé d'une commande mécanique réalisée au moyen d'un levier 50 articulé par une de ses extrémités au moyen d'un axe formant pivot 52 sur l'extrémité 32 du segment 14. Son autre extrémité 54 est prévue pour être reliée à un câble de commande relié à un levier situé dans la cabine du véhicule (non représenté). Ce levier 50 comporte une saillie 56 qui s'appuie sur la tranche de l'âme 18 du segment 14 pour définir la position de repos de ce levier. L'entretoise 44 et plus précisément son élément 48 prend appui sur le levier 50 grâce au ressort de rappel des segments 40. Un ressort de rappel 58 du levier de frein à main 50 est monté entre l'âme 18 du segment 14 et un prolongement 60 de l'élément 48 de l'entretoise 44.

Conformément à l'invention, l'élément 46 est accroché au segment 12 au moyen d'un dispositif d'accrochage désigné dans son ensemble par la référence 62. En se reportant à la figure 2, on voit que l'élément 46 comporte un corps allongé fileté 64 relié à une fourche 66 passant de part et d'autre de l'âme 16 du segment 12 par une portion 68 comportant dans le mode de réalisation représenté une gorge 70 et un fond 72 de ladite fourche 66. L'âme 16 du segment 12 présente une découpe 74 comportant une partie 76 sensiblement parallèle à l'axe du corps 64 de l'élément 46, un fond de découpe 78 sensiblement perpendiculaire à l'axe du corps 64 et une saillie 80 qui pénètre dans la gorge 70 de la portion 68. Comme on le voit sur la figure 2, la portion 68 est placée entre le fond 78 de la découpe 74 formant zone d'appui et la saillie 80 maintenant ainsi axialement l'élément 46 par rapport à l'âme 16, c'est-à-dire par rapport au segment 12. Pour que l'élément 46 reste dans sa position opérante, il est maintenu dans cette position par un ressort 82 formant élément élastique, placé entre la portion 68 et plus précisément la gorge 70 et la partie 76 de la découpe 74, exerçant ainsi un effort dans le sens de la flèche A de la figure 2, c'est-à-dire sensiblement transversalement par rapport à l'élément 46, sur la portion 68 et la maintenant en position opérante. Comme on le voit sur les figures 2 et 3, le ressort 82 comporte deux bras 84 et 86 logés dans la gorge 70 et dont les extrémités libres s'arrêtent à proximité de la saillie 80 de part et d'autre de celle-ci. Ces deux bras 84 et 86 sont reliés entre eux par un corps 88 qui se prolonge par un troisième bras 90 replié de manière à venir en appui sur la partie 76 de la découpe 74. Les deux bras 84 et 86 forment ainsi une portion d'indexation du ressort 82 assurant le positionnement correct du troisième bras 90 par rapport à la partie 76 de la découpe 74. Comme on le voit sur la figure 2, la distance entre la saillie 80 et la partie 76 de la découpe 74 est légèrement supérieure à la dimension de l'élément 46 au niveau de cette saillie, c'est-à-dire à l'encombrement de la portion 68, de manière à pouvoir introduire axialement la portion 68 entre la saillie 80 et la partie 76.

Pour assurer le montage de l'entretoise 44 sur le segment 12, on peut procéder de deux manières différentes : soit on présente l'élément 46 obliquement de manière à faire pénétrer d'abord la saillie 80 dans la gorge 70 en passant entre les bras 84 et 86 du ressort 82 puis de basculer dans le sens de la flèche B l'élément 46 comprimant ainsi le ressort 82 et plus précisément le troisième bras 90 qui maintiendra la portion 68 en position opérante, soit de présenter l'élément 46 dans le sens de la flèche C de la figure 2 de manière à ce qu'il passe entre la saillie 80 et la partie 76, ceci en comprimant le troisième bras 90 du ressort 82, lorsque le fond 72 de la fourche 66 aura atteint le fond 78 de la découpe 74, le ressort 82 en repoussant dans le sens de la flèche A l'élément 46 lui fera prendre la position opérante dans laquelle il le maintiendra.

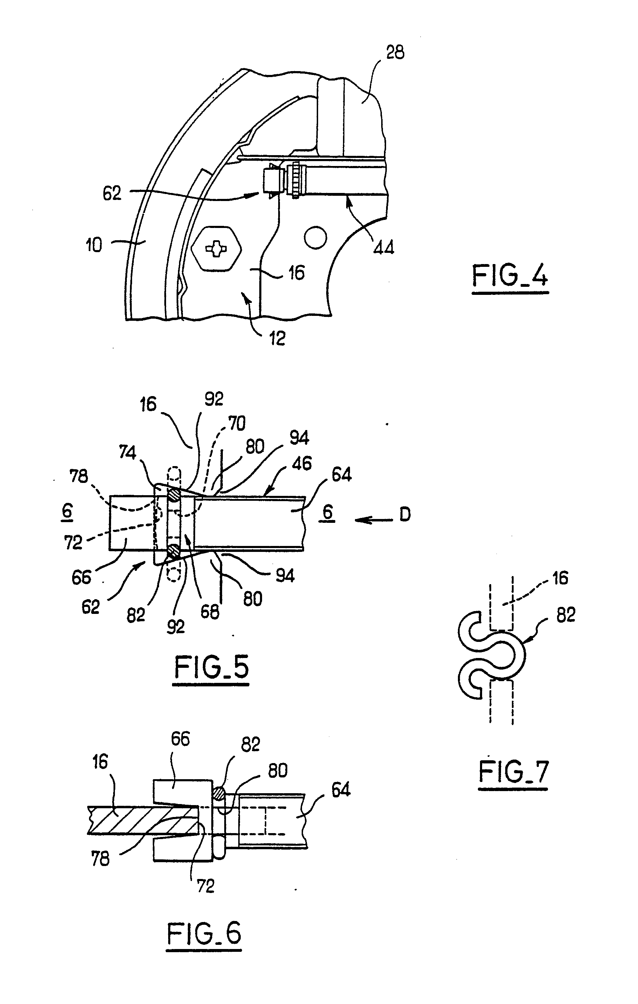

On a représenté sur les figures 4 à 7 un deuxième mode de réalisation dans lequel les mêmes éléments remplissant la même fonction porteront les mêmes références.

Dans ce mode de réalisation, la portion 68 comporte une gorge 70 dans laquelle est monté sans jeu axial notable un ressort 82 réalisé dans le cas représenté par un fil rond de diamètre légèrement inférieur à la largeur de la gorge 70. La gorge 70 a une profondeur supérieure au diamètre du fil du ressort 82. L'âme 16 du segment 12 présente une découpe 74 comportant un fond 78 sensiblement perpendiculaire à l'axe du corps 64 et deux saillies 80 dont la distance est légèrement supérieure à la dimension de la portion 68 et du corps 64. Les saillies 80 se prolongent vers le fond 78 en s'écartant progressivement de l'axe du corps 64, la longueur du fond 78 étant plus importante que la distance des deux saillies 80. Ces prolongements obliques des saillies 80 définissent deux flancs 92 obliques, se rapprochant au fur et à mesure que l'on s'éloigne du fond 78. La découpe 74 présente de plus, côté opposé à la jante 20, deux chanfreins d'entrée 94. En se reportant à la figure 7, on voit que le ressort 82 présente deux extrémités libres décalées par rapport au centre de la portion de cercle qui sera montée dans la gorge 70 de manière à ce que le ressort 82 ne tourne pas par rapport à l'âme 16 du segment 12 représenté en pointillé sur la figure 7.

Pour procéder au montage de l'entretoise 44 sur le segment 12 et plus précisément de l'élément 46 sur l'âme 16, on aura préalablement équipé la portion 68 du ressort 82 et on présentera selon la flèche D de la figure 5 l'élément 64 en vis-à-vis de la découpe 74. On introduira l'élément 46 entre les saillies 80 jusqu'à ce que le ressort 82 vienne en appui sur les chanfreins 94. Un effort complémentaire dans le sens de la flèche D repoussera le ressort 82 à l'intérieur de la gorge 70 et permettra à l'élément 46 de passer entre les saillies 80. Une poussée complémentaire dans le sens de la flèche D jusqu'à ce que le fond de la fourche 72 vienne en appui sur le fond 78 de la découpe 74 permet au ressort 82 de sortir partiellement de la gorge 70 et de venir élastiquement coopérer avec les flancs obliques 92 de la découpe 74, le ressort 82 agissant sensiblement transversalement par rapport à l'élément 46.

Ainsi, la portion 68 est maintenue élastiquement par le ressort 82 entre la zone d'appui 78 et les saillies 80, plus précisément les flancs 92 des saillies 80, interdisant ainsi l'élément 46 de se désolidariser de l'âme 16. En effet, pour extraire l'élément 46 du segment 12, il faut vaincre l'effort nécessaire à ce que le ressort 82 ou plus précisément deux portions diamétralement opposées de celui-ci ne pénètrent complètement dans la gorge 70. La portion 68 de l'élément 46 est donc ainsi maintenue en position opérante entre la zone d'appui formée par le fond 78 de la découpe 74 et les flancs obliques 92 des saillies 80.

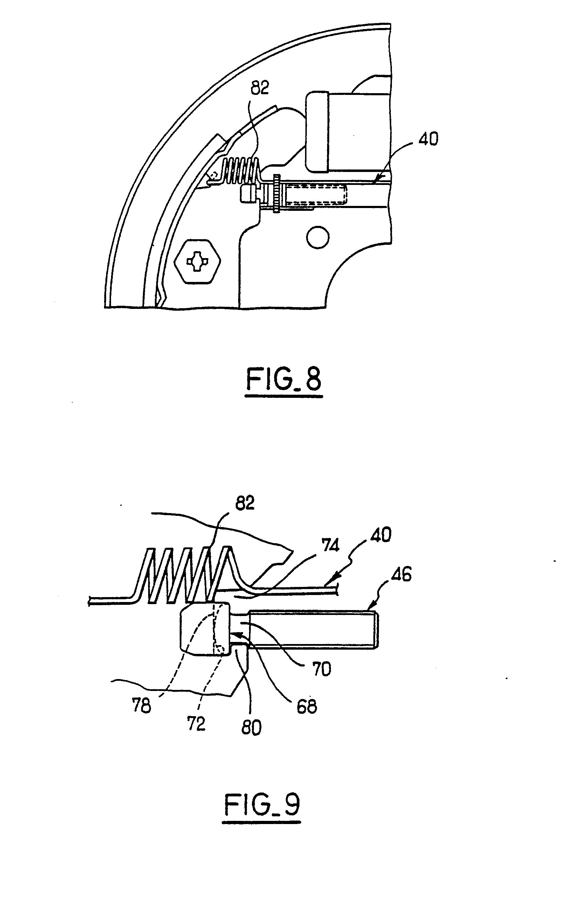

Sur les figures 8 et 9 on a représenté un troisième mode de réalisation de l'invention dans lequel les mêmes éléments remplissant les mêmes fonctions porteront les mêmes numéros de référence.

Dans ce troisième mode de réalisation, très proche par sa structure du premier mode de réalisation, l'élément élastique maintenant la portion 68 en position opérante est formé par une portion 82 du ressort 40 de rappel des segments. Comme on le voit sur les figures 8 et 9, le ressort 40 présente une portion enroulée 82 qui vient en appui sur la portion 68 de l'élément 46 maintenant celui-ci entre le fond 78 de l'encoche 74 et la saillie 80. Le montage se fait d'une façon similaire à celui du premier mode de réalisation avec la différence essentielle que l'élément 46 ne sera maintenu en position opérante entre le fond 78 et la saillie 80 qu'après montage du ressort 40 de rappel de segments qui agira sensiblement transversalement par rapport à l'élément 46.

Il est bien entendu que l'invention n'est pas limitée aux modes de réalisation représentés, en particulier si le frein ne comporte pas de commande mécanique, l'entretoise 44 peut comporter deux dispositifs d'accrochage similaires sur chacun de ses éléments 46 et 48. En effet, dans le mode de réalisation représenté, la présence de la commande mécanique impose un ressort de rappel 58 du levier 50 et il est astucieux de se servir de ce même ressort pour appliquer l'élément 48 sur le segment 14 au travers du levier 50. Des modifications peuvent être également envisagées sur le dispositif d'accrochage, par exemple en ce qui concerne la forme des découpes ou la forme des ressorts de maintien sans sortir pour cela du cadre de la présente invention.

**Revendications**

1. Dispositif d'accrochage (62) d'un élément (46) d'une entretoise (44) comportant un dispositif de réglage automatique sur un segment (12) de frein à tambour, caractérisé en ce que ledit dispositif (62) est formé par une portion (68) dudit élément (46) maintenue au moyen d'un élément élastique (82) dans une position opérante entre une zone d'appui (78) et une saillie (80) solidaires dudit segment (12), ledit élément élastique (82) agissant sensiblement transversalement par rapport audit élément (46).

2. Dispositif d'accrochage selon la revendication 1, caractérisé en ce que ladite zone d'appui (78) et ladite saillie (80) sont formées au moyen d'une découpe (74) dans une âme (16) dudit segment (12).

3. Dispositif d'accrochage selon l'une des revendications 1 ou 2, caractérisé en ce que ledit élément (46) comporte d'une manière connue en soi une fourche (66) passant de part et d'autre de l'âme (16) dudit segment (12) et un corps allongé (64) comportant un filetage et en ce que ladite portion (68) est formée entre ladite fourche (66) et ledit corps (64).

4. Dispositif d'accrochage selon la revendication 3, caractérisé en ce que ladite portion (68) comporte un fond (76) de ladite fourche (66) placé en vis-à-vis du fond (78) de ladite découpe (74), celui-ci formant ladite zone d'appui.

5. Dispositif d'accrochage selon la revendication 4, caractérisé en ce que ledit élément élastique (82) coopère d'une part avec ledit segment (12) et d'autre part avec ladite portion (68).

6. Dispositif d'accrochage selon la revendication 5, caractérisé en ce que ledit élément élastique (82) est solidaire de ladite portion (68) dudit élément (46).

7. Dispositif d'accrochage selon la revendication 6, caractérisé en ce que ladite portion (68) comporte une gorge (70) dans laquelle pénètre ladite saillie (80) formée dans l'âme (16) dudit segment (12).

8. Dispositif d'accrochage selon la revendication 7, caractérisé en ce que ledit élément élastique (82) prend appui sur une partie (76) de la découpe (74) s'étendant sensiblement parallèlement audit élément (46) et en ce qu'il comporte une portion d'indexation (84, 86) coopérant avec ladite gorge (70) appliquant son action et le maintenant sur ladite portion (68).

9. Dispositif d'accrochage selon la revendication 7, caractérisé en ce que ledit élément élastique (82) est formé par une portion d'un ressort de rappel (40) des segments (12, 14) maintenant ladite gorge (70) en coopération avec ladite saillie (80).

10. Dispositif d'accrochage selon la revendication 6, caractérisé en ce que ladite portion (68) comporte une gorge (70) dans laquelle est monté sans jeu axial notable ledit élément élastique (82) formé par un fil à ressort coopérant radialement élastiquement avec un flanc (92) de ladite saillie (80).

11. Dispositif d'accrochage selon la revendication 10, caractérisé en ce que ladite découpe (74) présente deux saillies (80) dont la distance minimale est légèrement supérieure à la dimension dudit élément (46) dans le plan de l'âme (16) au niveau desdites saillies (80).

12. Dispositif d'accrochage selon la revendication 11, caractérisé en ce que le fond (78) de ladite encoche (74) s'étend sur une longueur plus grande que ladite distance minimale des deux saillies et en ce que les deux saillies (80) se prolongent obliquement jusqu'au dit fond (78) définissant deux flancs obliques (92) se rapprochant au fur et à mesure que l'on s'éloigne dudit fond (78).

13. Dispositif d'accrochage selon la revendication 12, caractérisé en ce que ladite découpe (74) présente du côté opposé au fond (78) deux chanfreins d'entrée (94) et en ce que la profondeur de la gorge (70) est au moins égale à l'épaisseur radiale du fil à ressort formant l'élément élastique (82).

## Claims

1. Device (62) for anchoring an element (46) of a strut (44) comprising an automatic adjustment device on a segment (12) of a drum brake, characterized in that said device (62) is formed by a portion (68) of said element (46) maintained, by means of a resilient member (82), in an operating position between an engagement zone (78) and a projection (80) fixed to said segment (12), said resilient member (82) acting substantially transversely with respect to said element (46).

2. Device according to claim 1, characterized in that said engagement zone (78) and said projection (80) are formed by means of a cutout (74) in a web (16) of said segment (12).

3. Device according to any of claims 1 and 2, characterized in that said element (46) comprises, in a manner known per se, a fork (66) passing from one side to the other of the web (16) of said segment (12) and an elongated member (64) comprising threads, and in that said portion (68) is formed between said fork (66) and said member (64).

4. Device according to claim 3, characterized in that said portion (68) comprises a bottom (76) of said fork (66) placed opposite the bottom (78) of said cutout (74), the latter forming said engagement zone.

5. Device according to claim 4, characterized in that said resilient element (82) cooperates on the one hand with said segment (12) and on the other hand with said portion (68).

6. Device according to claim 5, characterized in that said resilient member (82) is fixed to said portion (68) of said element (46).

7. Device according to claim 6, characterized in that said portion (68) includes a groove (70) engaged by said projection (80) formed in the web (16) of said segment (12).

8. Device according to claim 7, characterized in that said resilient member (82) engages a portion (76) of said cutout (74) extending substantially parallel to said element (46), and in that it comprises an indexing portion (84, 86) cooperating with said groove (70) applying and maintaining its action against said portion (68).

9. Device according to claim 7, characterized in that the resilient member (82) is formed by a portion of a return spring (40) of the segments (12, 14) maintaining said groove (70) in cooperation with said projection (80).

10. Device according to claim 6, characterized in that said portion (68) comprises a groove (70) wherein said resilient member (82) is mounted without noticeable axial play, the resilient member being formed by a spring wire which radially resiliently cooperates with a lateral edge (92) of said projection (80).

11. Device according to claim 10, characterized in that said cutout (74) presents two projections (80) having a minimal distance which is slightly greater than the dimension of said element (46) in the plane of the web (16) at the level of said projections (80).

12. Device according to claim 11, characterized in that the bottom (78) of said cutout (74) extends over a length that is greater than said minimal distance of the two projections, and in that the two projections (80) are obliquely prolongated to said bottom (78) defining two oblique lateral edges (92) which converge in a direction away from said bottom (78).

13. Device according to claim 12, characterized in that said cutout (74) presents two inlet chamfers (94) at the side opposite the bottom (78), and in that the depth of the groove (70) is at least equal to the radial thickness of the spring wire forming the resilient member (82).

## Patentansprüche

1. Vorrichtung (62) zur Befestigung eines Elementes (46) einer Strebe (44) mit einer selbsttätigen Nachstellvorrichtung an einem Backen (12) einer Trommelbremse, dadurch gekennzeichnet, daß die Vorrichtung (62) von einem Abschnitt (68) des Elementes (46) gebildet wird, der mittels eines elastischen Teiles (62) In einer Betriebsstellung zwischen einem Angriffsbereich (78) und einem mit dem Backen (12) fest verbundenen Vorsprung (80) gehalten wird, wobei das elastische Teil (62) im wesentlichen in Querrichtung bezüglich des Elementes (46) wirkt.

2. Vorrichtung nach Anspruch 1, dadurch gekennzeichnet, daß der Angriffsbereich (78) und der Vorsprung (80) mittels einer Ausnehmung (74) in einem Steg (16) des Backens (12) gebildet sind.

3. Vorrichtung nach Anspruch 1 oder 2, dadurch gekennzeichnet, daß das Element (46) in an sich bekannter Weise eine sich beidseitig zum Steg (16) des Backens (12) erstreckende Gabel (66) und ein mit Gewinde versehenes stiftförmiges Teil (64) aufweist und daß der besagte Abschnitt (68) zwischen der Gabel (66) und dem stiftförmigen Teil (64) gebildet ist.

4. Vorrichtung nach Anspruch 3, dadurch gekennzeichnet, daß der Abschnitt (68) einen Boden (76) der Gabel (66) umfaßt, der gegenüber dem Boden (78) der Ausnehmung (74) angeordnet ist, wobei dieser den Angriffsbereich bildet.

5. Vorrichtung nach Anspruch 4, dadurch gekennzeichnet, daß das elastische Teil (82) einerseits mit dem Backen (12) und andererseits mit dem besagten Abschnitt (68) zusammenwirkt.

6. Vorrichtung nach Anspruch 5, dadurch gekennzeichnet, daß das elastische Teil (82) mit dem besagten Abschnitt (68) des Elementes (46) fest verbunden ist.

7. Vorrichtung nach Anspruch 6, dadurch gekennzeichnet, daß der besagte Abschnitt (68) eine Nut (70) umfaßt, in die der im Steg (16) des Backens (12) gebildete Vorsprung (80) greift.

8. Vorrichtung nach Anspruch 7, dadurch gekennzeichnet, daß das elastische Teil (82) an einem Abschnitt (76) der Ausnehmung (74) angreift, der sich im wesentlichen parallel zu dem Element (46) erstreckt, und daß sie einen Indexierabschnitt (84, 66) aufweist, der mit der Nut (70) zusammenwirkt, indem er auf den besagten Abschnitt (68) einwirkt.

9. Vorrichtung nach Anspruch 7, dadurch gekennzeichnet, daß das elastische Teil (82) von einem Abschnitt einer Rückholfeder (40) der Backen (12, 14) gebildet wird, das die Nut (70) mit dem Vorsprung (80) in Wirkverbindung hält.

10. Vorrichtung nach Anspruch 6, dadurch gekennzeichnet, daß der besagte Abschnitt (68) eine Nute (70) umfaßt, in der ohne merkliches axiales Spiel das elastische Teil (62) montiert ist, welches von einem Federdraht gebildet wird, das in radialer Richtung elastisch mit einer Flanke (92) des Vorsprungs (80) zusammenwirkt.

11. Vorrichtung nach Anspruch 10, dadurch gekennzeichnet, daß die Ausnehmung (74) zwei Vorsprünge (80) aufweist, deren kleinster Abstand geringfügig größer als die Abmessung des Elementes (46) in der Ebene des Steges (16) auf Höhe der Vorsprünge (80) ist.

12. Vorrichtung nach Anspruch 11, dadurch gekennzeichnet, daß der Boden (78) der Ausnehmung (74) sich über eine Länge erstreckt, die größer ist als der kleinste Abstand der beiden Vorsprünge, und daß die beiden Vorsprünge (80) in schräger Richtung bis zu dem besagten Boden (78) verlängert sind, welcher zwei schräge Flanken (92) bildet, die sich im gleichen Maße einander nähern, wie sie sich vom Boden (78) entfernen.

13. Vorrichtung nach Anspruch 12, dadurch gekennzeichnet, daß die Ausnehmung (74) auf der dem Boden (78) gegenüberliegenden Seite zwei Eintrittsfasen (94) aufweist und daß die Tiefe der Nut (70) mindestens gleich der radialen Dicke des das elastische Teil (82) bildenden Federdrahtes ist.

FIG_1

FIG_2

FIG_3

1

FIG_4

FIG_5

FIG_7

FIG_6

FIG_8

FIG_9